# EUROPEAN PATENT SPECIFICATION

(11) **EP 2 301 740 B1**
(45) Date of publication and mention of the grant of the patent: **06.07.2016**
(21) Application number: 10168765.5
(22) Date of filing: 07.07.2010
(51) Int. Cl.: B27D 5/00, B29C 63/00, B29C 63/02, B32B 3/02, B32B 3/08, B32B 21/02, B32B 21/06, B32B 21/14, A47B 96/20

(54) **Process for overlaying edged parts**
Verfahren zum Überziehen von mit Leisten versehene Teilen
Procédé pour recouvrir des pièces avec une bordure de protection

(30) Priority: 23.09.2009 ES 200901892
(43) Date of publication of application: 30.03.2011
(73) Proprietor: BARBERAN LATORRE, Jesus Francisco, 08860 Castelldefels Barcelona (ES)
(72) Inventor: BARBERAN LATORRE, Jesus Francisco, 08860 Castelldefels Barcelona (ES)
(74) Representative: Intès, Didier Gérard André

(56) References cited:
- EP-A1- 0 580 067
- EP-A1- 1 574 634
- DE-A1- 2 401 328
- DE-A1- 3 926 161
- DE-A1- 19 532 819
- ES-A1- 2 298 034

## Description

### Field of the Art

The present invention relates to panels and similar parts structured with a core on which a covering for aesthetic adaptation is arranged on the surface and a finishing edging on the edges, proposing a process of applying the overlay of said parts, which allows to effectively conceal the edging incorporated on the edges.

### State of the Art

It is known to form wooden parts as furniture components with a basic particle board or low-quality wood element, on which an overlay for aesthetic adaptation is incorporated over the surface and a finishing edging over the edges.

In conventional practice, the aesthetic overlay of said parts is determined by means of applying a printed laminar element, which can be made of paper, plastic, thin wood veneer or other similar materials, over which a finishing varnish is then applied.

According to one technique, the laminar element forming the aesthetic covering is applied over the surface of the base element, folding it over the edges, whereby the entire piece is uniformly overlaid over the surface and the edges. With this technique, use of a paper sheet covering causes said element to adhere poorly at the fold over the edges and, as a result, to crease and peel off, whereas if a wood veneer is used, it breaks at the ridges, causing cracks which deteriorate the aesthetic finish of the parts. The process also requires special machinery, so it is expensive.

As a solution to that respect and to provide the edges with a consistent finish, edging is typically resorted to, which consists in incorporating, over the edge, an independent laminar strip of a certain hardness, provided with the desired aesthetic appearance, said strip being applied after applying the aesthetic covering over the rest of the part.

Applying the edgings, however, requires cutting or trimming the edge of the strip in order to make it flush with the surface of the part, resulting in a finish in which the edge of the strip of the edging is noticeably distinct from the rest of the surface covering of the piece, which involves a deterioration of the aesthetics of the assembly of the formed part.

### Object of the Invention

According to the invention a process of applying the aesthetic overlay in pieces provided with edging on the edges is proposed, such that a finish is obtained with said process, which is perfectly concealed with respect to the surface overlay of the piece.

The formation of a part according to this process of the invention consists in applying a one-color background over the surface face of the base element of the piece to be formed, by means of a sheet of paper, a layer of lacquer or any other type of covering, over which a protective layer of varnish is then extended, an edging strip then being incorporated over the edges after the layer of varnish has been extended over said background, which strip is cut or trimmed in order to make it flush with the covered and varnished surface face of the base element, and once this is done a print having the desired aesthetic configuration is applied in extension over the surface of the layer of varnish, said print being extended continuously over the entire surface face of the base element and over the edge of the edging strips, a protective layer of transparent finishing varnish finally being applied over the printed surface by means of any of the known ways of application.

The print of the overlay thus covers the junction between the edging strips and the body of the part, as well as the edge of the edging strips, with the result of the formed piece having a completely uniform surface with a perfect aesthetic appearance.

Moreover, the aesthetic print is applied in this case on the base element of the parts already cut to the necessary measurements and edged, which allows to adapt, in a customized manner, the print to the base element on which it is applied, unlike with the conventional method, in which an already printed covering is incorporated over the base element, cutting that joint assembly in order to adapt it to the measurements of the desired part, requiring to that end a special calculation in order to respect as much as possible the representation of the print.

With the solution of the process of the invention, it is only necessary to have base elements in stock for the measurements of the different parts to be made, unlike with the conventional method which requires having base elements in stock for the measurements of the different parts to be made and furthermore to have in stock the printed coverings with the different types of prints to be applied, the selection of the base element and of the corresponding printed covering for each part to be made being necessary.

Therefore, the process of the invention satisfactorily solves the aesthetic drawback of the conventional overlays of edged parts, providing advantageous features which give it its own identity and preferred character for that application.

### Description of the Drawings

Figure 1 shows a sectional view of a base element intended for being overlaid to form an aesthetically finished part.
Figure 2 shows the application of a covering paper over the surface face of the previous base element according to the process of the invention.
Figure 3 shows the extension of a layer of varnish over the covering paper applied in the previous phase according to the process of the invention.
Figure 4 shows the incorporation of an edging strip over the edge of the part being formed covered with the paper and the layer of varnish.
Figure 5 shows the adaptation of the edge of the edging strip flush with the surface face of the part being formed.
Figure 6 shows the application of the final finishing print over the piece according to the process of the invention.
Figure 7 shows the extension of a protective layer of transparent finishing varnish over the printed surface.
Figure 8 shows an altenative outside the scope of the present invention, wherein the layer of varnish is applied over the edged base element provided with a one-color bottom.

### Detailed Description of the Invention

The object of the invention relates to a process for overlaying parts for furniture or similar applications, with a formation comprising a base element 1 of particle board, MDF, compressed paper, low-quality wood or other materials, on which an edging strip 2 is incorporated over the edges.

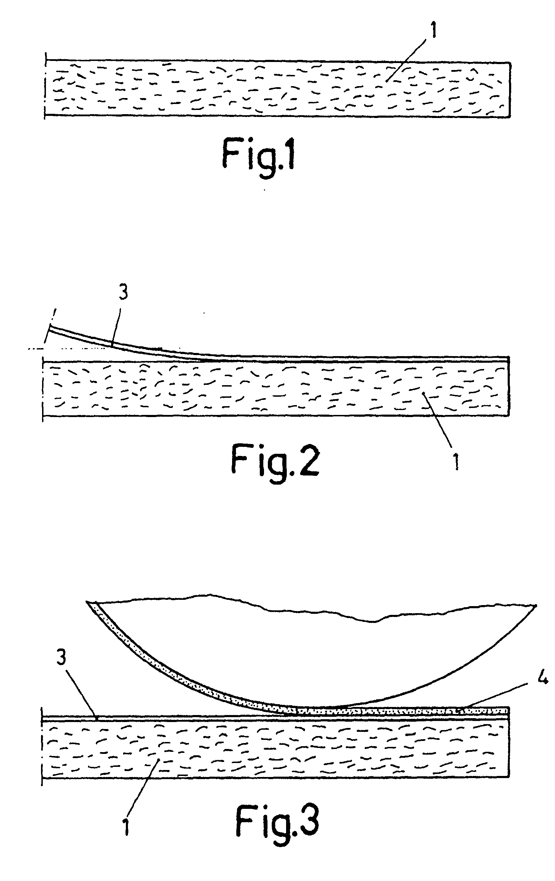

The process of the invention consists of covering the surface face of the base element 1 with a one-color background 3 by means of a paper, a sealing lacquer or other covering element, as is observed in Figure 2, then extending over said one-color background 3 a layer 4 of varnish, as is shown in Figure 3.

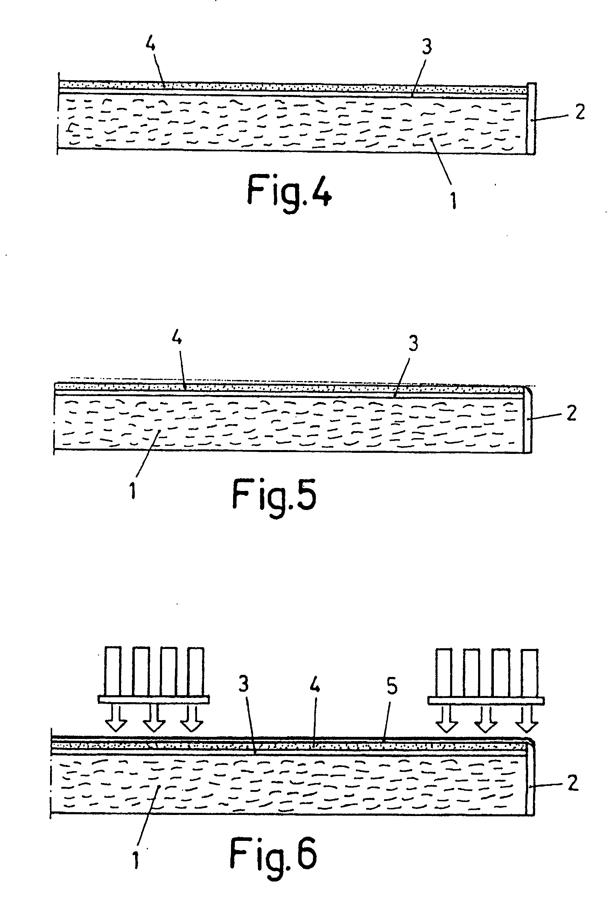

Once this is done, an edging strip 2 is incorporated over the edge of the part being formed, as is shown in Figure 4, said edging strip 2 then being cut or trimmed to remove the excess material and thus make it flush to the surface face of the layer of varnish, as is shown in Figure 5.

A print 5 with a configuration of the ornamental appearance that is desired is then applied on the surface face of the layer of varnish part, said print 5 being extended continuously on the surface face of the layer of varnish and until covering the edge of the edging strips 2 incorporated over the edges, as is shown in Figure 6.

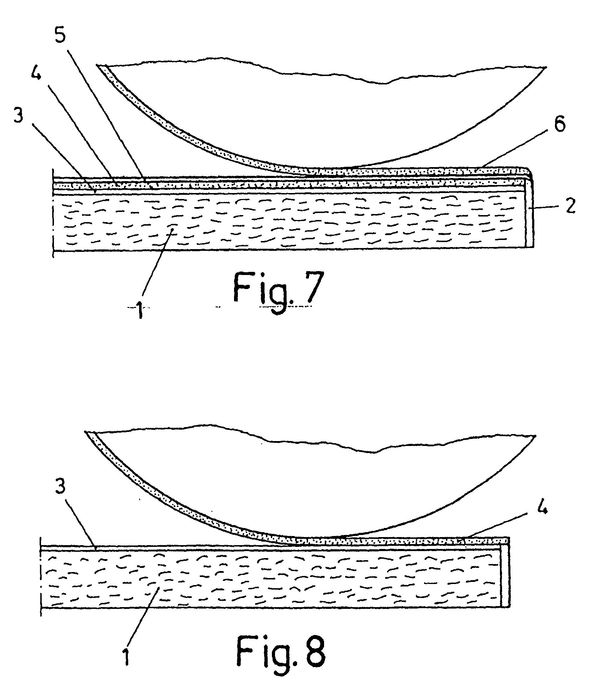

Finally, a protective layer 6 of transparent finishing varnish is extended over the printed surface, as is shown in Figure 7.

A finished piece is thus obtained in which the aesthetic overlay defines a uniform surface over the entire extension of the part, concealing the junction and the edge of the edging strips 2, such that the arrangement of said edging strips 2 is not noticeable in the surface face of the formed part.

The layer 4 of varnish over the base element 1 covered with the background 3 can in turn be extended with any type of machine or tool for applying varnish, for example by means of a roller applicator, a lip applicator, or any other type of conventional applicator. The surface of said layer 4 of varnish can be sanded for its adaptation before applying the print 5 on it.

Said layer 4 of varnish can be extended over the base element 1 provided with the background 3 before the edging strips 2 are incorporate as in Figure 3, but according to an alternative outside the scope of the present invention (Figure 8), the layer 4 of varnish is extended after the edging strips 2 are incorporated over the base element 1 provided with the background 3, said layer 4 of varnish being extended such that it covers the surface on which the background 3 and the edge of the edging strips 2 are applied, the junction of the edging strips 2 with the base element 1 being covered by the layer 4 of varnish, whereby preventing the ink from the print 5 that is subsequently applied over the surface of the layer 4 of varnish from penetrating said junction of the edging strips 2 over the base element 1.

It is provided that the preferred manner of applying the print 5 over the surface face of the part to be formed is by means of a projection printing system, but it can also be done by means of any other type of print, such as flexography, off-set, gravure, etc., without this altering the concept of the system of the invention.

In its application function, the system can be used for forming overlaid and edged parts for furniture or any other application, such as beveled floorboards, baseboards, and any type of pieces in which due to their design, external appearance and decorative application, the ridges of the edges are particularly relevant since they are in plain sight by unifying the surface face and the edge, together with its ridge, in a unique design with an aesthetically attractive finish.

## Claims

1. A process for overlaying edged parts of the type intended for determining an aesthetic surface layer over a base element (1), **characterized in that** a one-color covering background (3) is applied over the surface face of the base element (1), on which background a layer (4) of varnish is extended, an edging strip (2) being incorporated over the edges of the base element (1) provided with the one-color covering background (3) and after the layer (4) of varnish has been extended over said background (3), said edging strip (2) being cut or trimmed in order to make it flush with the covered and varnished surface face of the base element (1), a print (5) with an aesthetic configuration being applied thereafter in extension over the surface of the layer (4) of varnish, and extended over the entire surface face of the base element (1) and over the edge of the edging strips (2), and a protective layer (6) of transparent finishing varnish is extended on the printed surface.

2. The process of overlaying edged parts according to claim 1, **characterized in that** the surface of the layer (4) of varnish is sanded before applying the print (5) over it.

## Patentansprüche

1. Verfahren zum Beschichten von kantigen Teilen der Art, die dazu bestimmt ist, eine ästhetische Oberflächenschicht auf einem Grundelement (1) zu definieren, **dadurch gekennzeichnet, dass** eine einfarbige Deck-Grundierung (3) auf die Oberfläche des Grundelements (1) aufgebracht wird, auf welche Grundierung eine Lackschicht (4) aufgetragen wird, wobei über die Kanten des mit der einfarbigen Deck-Grundierung (3) versehenen Grundelements (1) ein Kantenstreifen (2) eingebunden wird und wobei, nachdem die Lackschicht (4) auf die Grundierung (3) aufgetragen wurde, der Kantenstreifen (2) geschnitten oder gekürzt wird, um ihn mit der grundierten und lackierten Oberfläche des Grundelements (1) abschließen zu lassen, worauf ein Druck (5) mit einer ästhetischen Gestaltung großflächig auf die Oberfläche der Lackschicht (4) aufgebracht und über die gesamte Oberfläche des Grundelements (1) und über die Kanten der Kantenstreifen (2) ausgebreitet wird, und eine Schutzschicht (6) eines transparenten Überzugslacks auf die gedruckte Oberfläche aufgetragen wird.

2. Verfahren zum Beschichten von kantigen Teilen nach Anspruch 1, **dadurch gekennzeichnet, dass** die Oberfläche der Lackschicht (4) aufgeraut wird, bevor der Druck (5) auf sie aufgebracht wird.

## Revendications

1. Procédé pour recouvrir des pièces bordées, du type destiné à déterminer une couche de surface esthétique sur un élément de base (1), **caractérisé en ce qu'**un fond de recouvrement monochrome (3) est appliqué sur la face de surface de l'élément de base (1), une couche (4) de vernis étant appliquée sur ledit fond, une bande de chant (2) étant intégrée par-dessus les bords de l'élément de base (1), avec le fond de recouvrement monochrome (3), et, après que la couche (4) de vernis a été appliquée sur ledit fond (3), ladite bande de chant (2) est découpée ou taillée afin qu'elle affleure la face de surface recouverte et vernie de l'élément de base (1), un motif (5) qui présente une configuration esthétique étant ensuite appliqué en extension sur la surface de la couche (4) de vernis, et étendu sur la face de surface entière de l'élément de base (1) et par-dessus le bord de la bande de chant (2), et une couche de protection (6) en vernis de finition transparent est appliquée sur la surface imprimée.

2. Procédé pour recouvrir des pièces bordées selon la revendication 1, **caractérisé en ce que** la surface de la couche (4) de vernis est sablée avant d'appliquer le motif (5) par-dessus.
